# EUROPEAN PATENT SPECIFICATION

(11) **EP 2 154 818 B1**
(45) Date of publication and mention of the grant of the patent: **21.11.2012**
(21) Application number: 08757541.1
(22) Date of filing: 29.05.2008
(51) Int. Cl.: H04M 15/00, H04L 12/14

(54) **CHARGING METHOD, CHARGING SYSTEM AND APPLICATION SERVER**
VERGEBÜHRUNGSVERFAHREN, VERGEBÜHRUNGSSYSTEM UND ANWENDUNGSSERVER
PROCÉDÉ DE FACTURATION, SYSTÈME DE FACTURATION ET SERVEUR D'APPLICATION

(30) Priority: 08.11.2007 CN 200710170307
(43) Date of publication of application: 17.02.2010
(73) Proprietor: Huawei Technologies Co., Ltd., Longgang District, Shenzhen Guangdong 518129 (CN)
(72) Inventor: KANG, Jiao c/o Huawei Technologies Co.Ltd., Longgang District 518129, Shenzhen (CN); SHAN, Mingjun c/o Huawei Technologies Co.Ltd., Longgang District 518129, Shenzhen (CN); LI, Chun c/o Huawei Technologies Co.Ltd., Longgang District 518129, Shenzhen (CN); SHI, Xin c/o Huawei Technologies Co.Ltd., Longgang District 518129, Shenzhen (CN)
(74) Representative: Kreuz, Georg Maria
(86) International application number: PCT/CN2008/071130
(87) International publication number: WO 2009/059503

(56) References cited:
- EP-A1- 1 662 702
- CN-A- 1 474 535
- CN-A- 1 610 305
- CN-A- 1 997 150
- 3GPP: "3rd Generation Partnership Project;Technical Specification Group Service and System Aspects;Telecommunication management; Charging management;Push-to-talk over Cellular (PoC) charging;(Release 6)" 3GPP DRAFT; 32272-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Quebec, Canada; 20050527, 27 May 2005 (2005-05-27), XP050205200 [retrieved on 2005-05-27]
- "3rd Generation Partnership Project; Technical Specification Group Service and System Aspects; Telecommunication management; Charging management; IP Multimedia Subsystem (IMS) charging (Release 8)" 3GPP STANDARD; 3GPP TS 32.260, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 September 2007 (2007-09-01), pages 1-89, XP050374482

## Description

### Field of the Invention

The disclosure relates to communication technologies, and in particular, to a charging method, a network system, a charging system, and an application server.

### Background of the Invention

With the rapid development of mobile network communication technologies, the existing communication network provides various message services, for example, the Short Message Service (SMS), Multimedia Message Service (MMS), Instant Message (IM), and Push-to-Talk over Cellular (PoC) service based on half duplex, to meet different communication requirements of users.

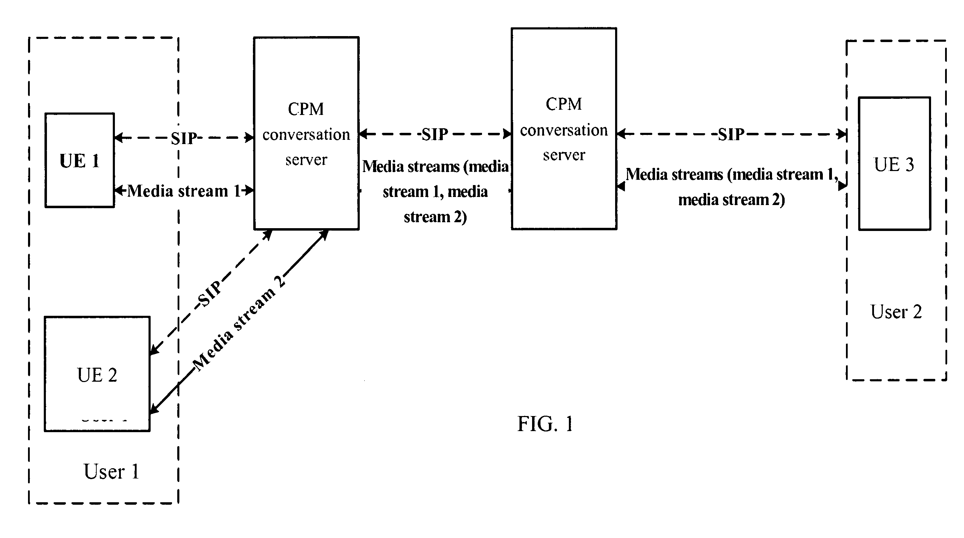

Currently, the Open Mobile Alliance (OMA) puts forward a converged message service, which is the convergence of all message-based services such as MMS, IM, PoC, and SMS. In the Converged IP Messaging (CPM), a user may register with multiple User Equipments (UEs) on a CPM conversation server, and may use multiple UEs in the same session to process the media streams in the session. FIG. 1 shows a system architecture for processing media streams through multiple UEs in the same session in the prior art. UE1 and UE2 are owned by CPM user 1; and UE1 and UE2 set up a session connection with UE3 (owned by CPM user 2) through a Session Initiation Protocol (SIP) message. In the session, the CPM conversation server transmits the media streams to the corresponding UE according to preset information or the selection made by the user of the session. For example, the CPM conversation server transmits the video streams to the computer of the user and transmits the audio streams to the mobile phone of the user. In this case, the video streams and the audio streams are in the same session. Besides, in a CPM session, if a media stream changes (for example, if a media stream is added or modified), the CPM conversation server allows the CPM user to select the corresponding UE for updating. However, the existing charging solution for the message services provides no method for charging a user who uses multiple UEs to process services in a session.

The specification 3GPP TS 32.272 V2.0.0 "3rd Generation Partnership Project; Technical Specification Group Service and System Aspects; Telecommunication management; Charging management; Push-to-talk over Cellular (PoC) charging; (Release 6)" discloses a charging method for PoC services. The PoC server sends the PoC charging specific parameters to the online charging system through the Ro interface, wherein the charging specific parameters include PoC-Server-Role, PoC-Session-Type, Number-Of-Participants, List-Of-Participants and Talk-Burst-Exchange.

The patent application EP 1662702A1 discloses call control with converged application server logic and gateway logic in IMS networks, wherein an online charging method in an IMS network is provided.

The specification 3GPP TS 32.260 V8.1.0 "3rd Generation Partnership Project; Technical Specification Group Service and System Aspects; Telecommunication management; Charging management; IP Multimedia Subsystem (IMS) charging (Release 8)" discloses charging functionality and charging management in GSM/UMTS networks. The SIP AS CDR content is introduced, the Charging Data of AS CDR includes "SDP Media Components" parameter, and the "SDP Media Components" parameter further includes "SDP Media Name", "SDP Media Description" and "Access Correlation ID" sub-parameter.

### Summary of the Invention

According to various aspects of the invention a charging method, a charging system, and an application server are provided to charge a user who uses multiple UEs to process services in a session.

A charging method provided according to a first aspect includes:
by a charging system, receiving a charging request from an application server, where the charging request carries at least two UEs' access information corresponding to media resources, wherein the application server interacts with at least two UEs of a user to obtain the UE access information corresponding to media resources, and the UE access information corresponding to media resources comprise: an access mode of the UE and a media type received by the UE;
charging, by the charging system, according to the UE access information corresponding to the media resources in the charging request; and returning, by the charging system, a charging response to the application server after completion of the charging.

A charging system provided according to a second aspect includes:
an information extracting unit, adapted to: receive a charging request which is sent by an application server and carries at least two UEs' access information corresponding to media resources, and extract the UE access information corresponding to media resources out of the charging request, wherein the application server interacts with at least two UEs of a user to obtain the UE access information corresponding to media resources, and the UE access information corresponding to media resources comprise: an access mode of the UE and a media type received by the UE;
a processing unit, adapted to: perform charging according to the UE access information corresponding to media resources, which is extracted by the information extracting unit; and
a responding unit, adapted to return a charging response to the application server according to the processing result of the processing unit.

An application server provided according to a third aspect includes:
an information obtaining unit, adapted to obtain UE access information corresponding to media resources by interacting with at least two UEs of a user, wherein the UE access information corresponding to media resources comprise: an access mode of the UE and a media type received by the UE; and
a charging request unit, adapted to: generate a charging request and send it to a charging system, where the charging request carries at least two UEs access information corresponding to media resources which is obtained by the information obtaining unit.

In the technical solution under the disclosure, the charging system receives the charging request from the application server, and the charging request carries at least two UEs' access information corresponding to media resources; the charging system performs charging according to the UE access information corresponding to media resources in the charging request; and the charging system returns a charging response to the application server after completion of the charging. In the technical solution under the disclosure, the application server may obtain the information about media resources accessed by multiple UEs of one user, and add such information into the charging request sent to the charging system. The charging system extracts such information out of the charging request for charging. In this way, charging is performed for the service processed by multiple UEs of one user in a session.

### Brief Description of the Drawings

FIG. 1 shows a system architecture for processing media streams through multiple UEs in a same session in the prior art;
FIG. 2 shows a schematic architecture of a system according to an embodiment of the disclosure;
FIG. 3 is a flowchart of a charging method according to an embodiment of the disclosure;
FIG. 4 is a flowchart of a charging method according to a first embodiment of the disclosure;
FIG. 5 is a flowchart of a charging method according to a second embodiment of the disclosure;
FIG. 6 is a flowchart of a charging method according to a third embodiment of the disclosure;
FIG. 7 is a flowchart of a charging method according to a fourth embodiment of the disclosure;
FIG. 8 shows a schematic architecture of a network system according to an embodiment of the disclosure;
FIG. 9 shows a schematic architecture of a charging system according to an embodiment of the disclosure; and
FIG. 10 is a schematic view showing a structure of an application server according to an embodiment of the disclosure.

### Detailed Description of the Embodiments

A charging method is provided in an embodiment of the disclosure to charge a user who uses multiple UEs to process services in a session.

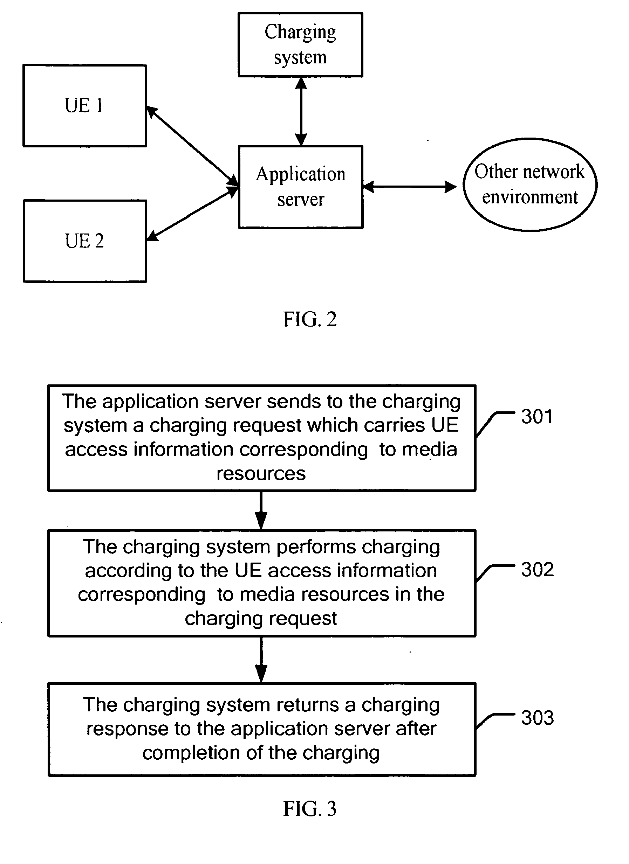

As shown in FIG. 2, the system architecture provided herein includes: UE1 and UE2 owned by a same user, an application server, a charging system, and other network environments. The application server is connected to UE1 and UE2, and is connected to the charging system so that the application server can transmit the information about charging for the session performed by multiple UEs of one user to the charging system. The application server in this embodiment is a CPM conversation server; but in practice, the application server may be any other network element capable of collecting the information about charging for the session performed by multiple UEs of the same user. As shown in FIG. 3, the charging method provided in an embodiment of the disclosure includes the following steps:
Step 301: The application server sends to the charging system a charging request which carries UE access information corresponding to media resources.

The application server interacts with at least two UEs of a user to obtain the UE access information corresponding to media resources, and adds the UE access information into the generated charging request which is then sent to the charging system.

The UE access information corresponding to media resources includes one of or any combination of the following parameters, depending on the setting provided by the operator:
(1) Uniform Resource Identifier (URI) of a UE, and/or other UE-related information such as device type indicative of the UE that processes the service;
(2) UE access mode, for example, General Packet Radio Service (GPRS) access mode, Digital Subscriber Line (xDSL) access mode, Wireless Fidelity (WIFI) access mode, or World Interoperability for Microwave Access (WiMAX) access mode;
(3) Type of media resources received by the UE, for example, video format, audio format, or text format;
(4) Media traffic received by the UE; and
(5) Type of the message service received by the UE, for example, PoC, or IM.

It should be noted that: This embodiment improves the parameters of the existing charging request, namely, Credit Control Request (CCR), and adds the UE access information corresponding to media resources into the CPM Info which includes UE-related information, as shown in Table 1.

**Table 1**

| **Parameter** | **Category** | **Description** |
|---|---|---|
| Media Info | Oc | UE access information corresponding to media resources |
| >SIP URI | Oc | URI of the UE |
| >Access Type | Oc | Access mode of the UE |
| >Media Type | Oc | Type of media received by the UE, for example, video format, audio format, or text format |
| >Volume | Oc | Media traffic received by the UE |
| >Message Service Type | Oc | Type of the message service received by the UE, for example, PoC, IM, or CPM |

The application server obtains the UE access information corresponding to media resources in this way: The application server determines the reported UE access information corresponding to media resources according to the UE access information corresponding to media resources which is carried in the received message and/or according to the user registration information stored in the application server.
The foregoing CPM Info may also be combined in the following modes:

| **Parameter** | **Category** | **Description** |
|---|---|---|
| Device | Oc | UE information |
| >SIP URI | Oc | URI of the UE |
| >Access Type | Oc | Access mode of the UE |
| >Media Type | Oc | Type of media received by the UE, for example, video format, audio format, text format, or any combination thereof |
| >Volume | Oc | Media traffic received by the UE |
| >Message Service Type | Oc | Type of the message service received by the UE, for example, PoC, IM, or CPM |

When the user registers the information about multiple UEs of the user onto the application server, the user may input one of or any combination of the parameters mentioned above. At different stages from the beginning to the end of the session, the application server can obtain UE access information corresponding to media resources according to the user registration information. The message received by the application server may already carry the UE access information corresponding to media resources. The application server may extract the UE access information corresponding to media resources out of the received message, or on that basis, further search the user registration information for the UE access information corresponding to media resources, compare the information and select the desired information. The message that carries the UE access information corresponding to media resources may be sent by each UE, or sent by a network device. For example, an access point of the network transmits the UE access mode to the application server, and the InterWorking Function (IWF) transmits the message service type used by the UE to the application server.

Step 302: The charging system performs charging according to the UE access information corresponding to the media resources in the charging request.

After receiving the charging request from the application server, the charging system extracts the UE access information corresponding to media resources out of the charging request. If the charging system is an online charging system, the online charging system rates the service consumed on this occasion, and reserves credit and/or deducts a sum from the stored user account according to the rating result. If the charging system is an offline charging system, the offline charging system records the reported charging information for the service consumed on this occasion.

Step 303: The charging system returns a charging response to the application server after completion of the charging.

In the case that the charging system is an online charging system, if the charging succeeds, the online charging system returns a success response to the application server; and, if the charging fails, the online charging system returns a failure response to the application server. In the case that the charging system is an offline charging system, if the charging succeeds, the offline charging system returns a response indicative of stored charging information to the application server; and, if the charging fails, the offline charging system returns a failure response to the application server.

The embodiments of the disclosure are further detailed on the basis of the following assumptions: the service is a CPM service; the application server is a CPM conversation server; and the UE access information corresponding to media resources includes a media type.

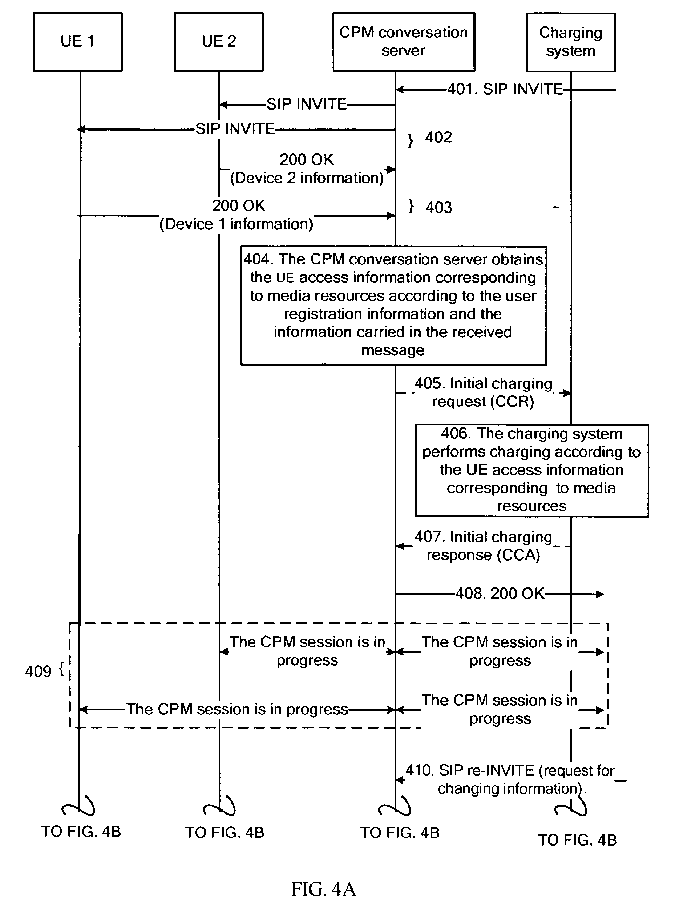

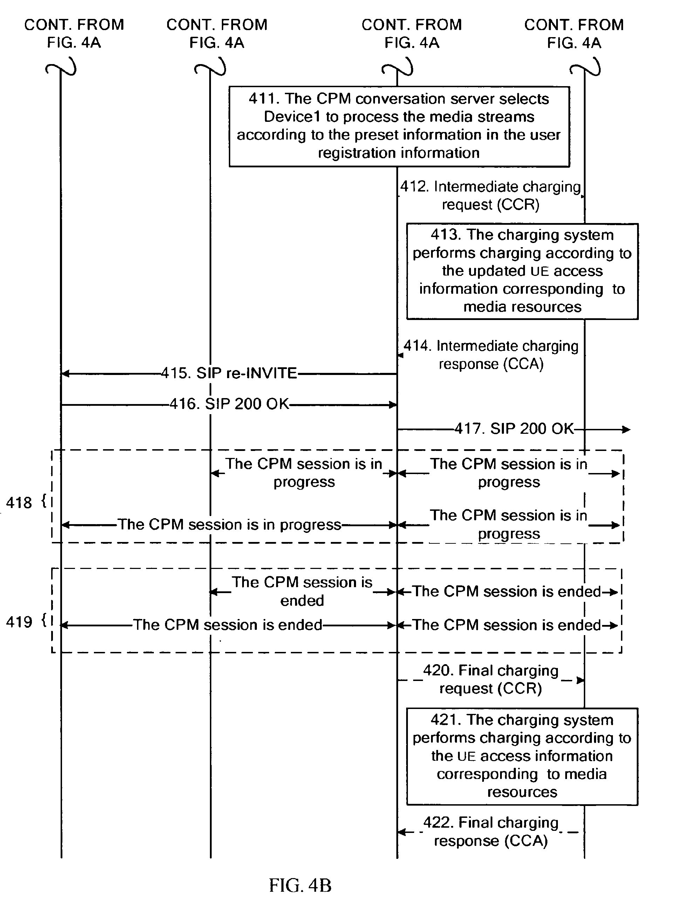

FIG. 4 is a flowchart of a charging method according to the first embodiment of the disclosure. The method includes the following steps:
Step 401: The CPM conversation server receives a SIP INVITE message.
In the SIP INVITE message received by the CPM conversation server, the address of the recipient is the public SIP URI of the recipient.

Step 402: The CPM conversation server obtains SIP URIs of UE1 and UE2, and forwards the SIP INVITE message to UE1 and UE2.

According to the user registration information, the CPM conversation server obtains the SIP URIs of UE1 and UE2, and forwards the SIP INVITE message to UE1 and UE2. Step 403: UE1 and UE2 return a SIP 200 OK message to the CPM conversation server. UE2 returns a SIP 200 OK message to the CPM conversation server. The SIP 200 OK message carries UE2 information which is described through a Session Description Protocol (SDP). An exemplary format of the information is given below:
v=0
m=audio 48400 RTP/AVP 0
c= IN IP4 audio_dev.example.com
where: v represents the protocol version number; m indicates the media type and the transmission port number supported by the UE (in this response, the supported media type is audio; the port number is 48400; and the protocol supported for transmitting audio is RTP); and c indicates the network information supported by the UE, including the supported network type (IN represents the Internet), the device address, and the supported Internet protocol.

UE1 returns a SIP 200 OK message to the CPM conversation server. The SIP 200 OK message carries UE1 information which is described through SDP. An exemplary format of the information is given below:
v=0
m=video 58400 RTP/AVP 34
c= IN IP4 video_dev.example.com

The media type supported in this response is video.

It should be noted that if UE1 supports audio additionally, the UE1 information may include the following additional information:
v=0
m=audio 48400 RTP/AVP 0
c= IN IP4 audio_dev.example.com

Step 404: The CPM conversation server obtains the UE access information corresponding to media resources according to the user registration information and the information carried in the received message.

It is assumed that the user presets UE1 to receive video streams and presets UE2 to receive audio streams on the CPM conversation server. If the SIP 200 OK message returned by UE1 indicates support of the video format and the SIP 200 OK message returned by UE2 indicates support of the audio format, the CPM conversation server compares the user registration information with the information carried in the received message to determine that the media type received by UE1 is video and that the media type received by UE2 is audio.

If the SIP 200 OK message returned by UE1 indicates support of both video and audio formats and the SIP 200 OK message returned by UE2 indicates support of both video and audio formats, the CPM conversation server compares the user registration information with the information carried in the received message to determine that the media type received by UE1 is video and that the media type received by UE2 is audio.

The application server may also determine that the media type received by UE1 is video and that the media type received by UE2 is audio according to the supported media type indicated in the SIP 200 OK message returned by UE1 and UE2.

Step 405: The CPM conversation server sends a CCR as an initial charging request to the charging system. The UE access information corresponding to media resources in the CCR indicates that UE1 receives video streams and that UE2 receives audio streams.

Step 406: The charging system performs charging according to the UE access information corresponding to the media resources.

For online charging, the charging system rates the service consumed on this occasion according to the UE access information corresponding to the media resources, and reserves credit for the corresponding user account according to the rating result. For offline charging, the charging system stores the charging information for the service consumed on this occasion.

Step 407: The charging system returns a Credit Control Answer (CCA) as an initial charging response to the CPM conversation server.

The charging system returns a CCA as an initial charging response to the CPM conversation server. The CCA carries a charging result. If the charging succeeds, the charging system accepts the service request of the user; and, if the charging fails, the charging system rejects the service request of the user. In this embodiment, it is supposed that the charging succeeds.

Step 408: The CPM conversation server forwards the SIP 200 OK message.

Step 409: The CPM session is set up on multiple UEs of the user, and the session is ongoing.

Step 410: The CPM conversation server receives a SIP re-INVITE message which requests to change media resources.

The SIP re-INVITE message may be a request for adding, deleting or modifying media resources. In this embodiment, it is supposed that the message is a request for adding an audio stream to the session.

Step 411: The CPM conversation server selects UE1 for processing according to the preset information in the user registration information.

It is assumed that the user presets UE1 to receive both video streams and audio streams, and presets UE2 to receive audio streams in the registration information on the CPM conversation server. In the foregoing process, UE1 has already received a video stream and UE2 has already received an audio stream. An audio stream needs to be added to the session. Therefore, the CPM conversation server selects UE1 to process the stream according to the user registration information. That is, the CPM conversation server selects UE1 to receive an audio stream additionally on the basis of the video stream already received.

Step 412: The CPM conversation server sends a CCR as an intermediate charging request to the charging system. The intermediate charging request carries the updated UE access information corresponding to media resources.

The updated UE access information corresponding to media resources is: UE I receives both video streams and audio streams, and UE2 receives audio streams.

It should be noted that: The intermediate charging request may carry the changed UE access information corresponding to media resources; that is, the updated UE access information corresponding to media resources may indicate that UE1 receives both video streams and audio streams.

Step 413: The charging system performs charging according to the updated UE access information corresponding to the media resources.

The UE access information corresponding to media resources has changed. Therefore, the charging system performs charging (including rating and credit reservation) according to the updated UE access information corresponding to media resources.

Step 414: The charging system returns a CCA as an intermediate charging response to the CPM conversation server.

Step 415: The CPM conversation server forwards a SIP re-INVITE message to UE1. Step 416: UE1 returns a SIP 200 OK message to the CPM conversation server.

The SIP 200 OK message returned by UE1 to the CPM conversation server indicates that new audio streams are receivable.

Step 417: The CPM conversation server forwards the SIP 200 OK message.

Step 418: The CPM session is set up on multiple UEs of the user, and the session is ongoing.

Step 419: The CPM session is ended.

Step 420: The CPM conversation server sends a CCR as a final charging request to the charging system. The final charging request carries the UE access information corresponding to media resources.

Step 421: The charging system performs charging according to the UE access information corresponding to the media resources.

In this step, the charging system deducts a sum charged for the service consumption.

Step 422: The charging system returns a CCA as a final charging response to the CPM conversation server.

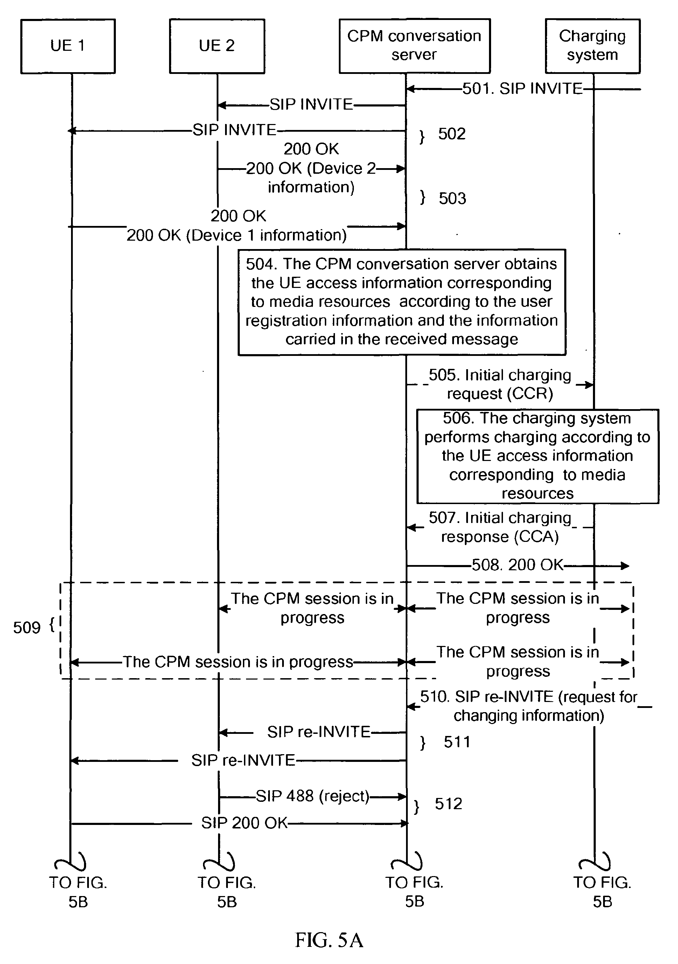

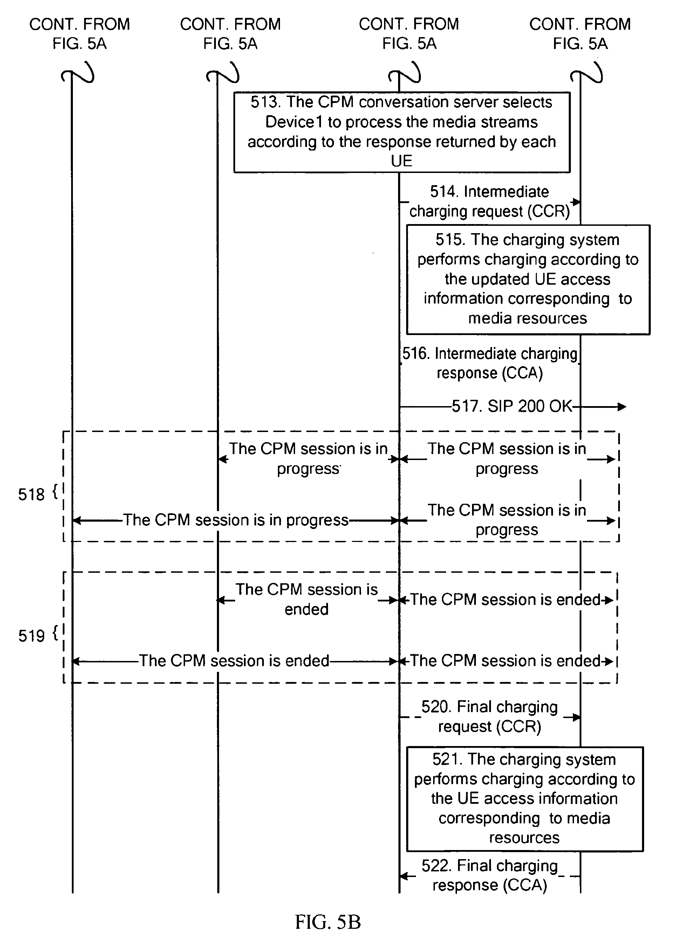

FIG. 5 is a flowchart of a charging method according to the second embodiment of the disclosure. The second embodiment differs from the first embodiment in that: In a session, after the CPM conversation server receives a SIP re-INVITE message which requests to change media resources, the CPM conversation server sends the SIP re-INVITE message to all UEs of the user, and selects a UE for processing the streams according to the response returned by the UE.

Steps 501-509 are similar to steps 401-409 in the first embodiment. Therefore, the description about the process in this embodiment begins with step 510.

Step 510: The CPM conversation server receives a SIP re-INVITE message which requests to change media resources.

The SIP re-INVITE message may be a request for adding, deleting or modifying media resources. In this embodiment, it is supposed that the message is a request for adding an audio stream to the session.

Step 511: The CPM conversation server forwards the SIP re-INVITE message to UE1 and UE2.

Step 512: UE1 returns a SIP 200 OK message to the CPM conversation server to indicate acceptance, and UE2 returns a SIP 488 message to the CPM conversation server to indicate rejection.

Step 513: The CPM conversation server selects UE1 to process the media stream according to the response returned by each UE.

In the foregoing process, UE1 has already received a video stream and UE2 has already received an audio stream. An audio stream needs to be added to the session. Therefore, the CPM conversation server selects UE1 to process the stream according to the response returned by each UE. That is, the CPM conversation server selects UE1 to receive an audio stream additionally on the basis of the video stream already received.

Step 514: The CPM conversation server sends a CCR as an intermediate charging request to the charging system. The intermediate charging request carries the updated UE access information corresponding to media resources.

The updated UE access information corresponding to media resources is as follows: UE1 receives both video streams and audio streams, and UE2 receives audio streams.

It should be noted that: The intermediate charging request may carry the changed UE access information corresponding to media resources; that is, the updated UE access information corresponding to media resources may indicate that UE I receives both video streams and audio streams.

Step 515: The charging system performs charging according to the updated UE access information corresponding to the media resources.

The UE access information corresponding to media resources has changed. Therefore, the charging system performs charging (including rating and credit reservation) according to the updated UE access information corresponding to media resources.

Step 516: The charging system returns a CCA as an intermediate charging response to the CPM conversation server.

Step 517: The CPM conversation server forwards the SIP 200 OK message.

Step 518: The CPM session is set up on multiple UEs of the user, and the session is ongoing.

Step 519: The CPM session is ended.

Step 520: The CPM conversation server sends a CCR as a final charging request to the charging system. The final charging request carries the UE access information corresponding to media resources.

Step 521: The charging system performs charging according to the UE access information corresponding to the media resources.

In this step, the charging system deducts a sum charged for the service consumption.

Step 522: The charging system returns a CCA as a final charging response to the CPM conversation server.

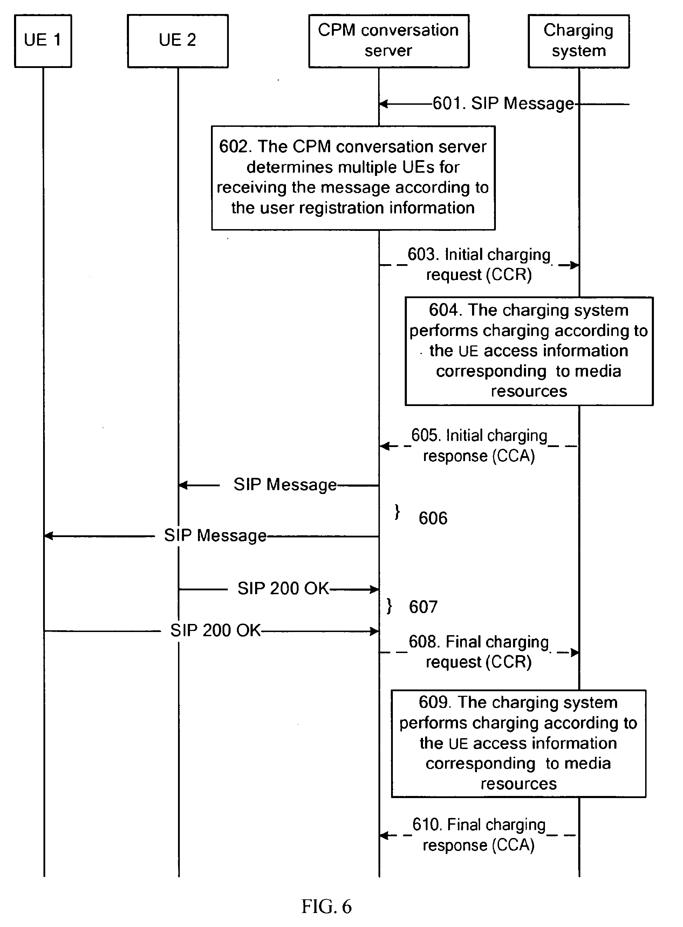

FIG. 6 is a flowchart of a charging method according to the third embodiment of the disclosure. In the third embodiment, the CPM conversation server receives a SIP message; no session interaction is involved; and the CPM conversation server sends no intermediate charging request to the charging system.

Step 601: The CPM conversation server receives a SIP message.

Step 602: The CPM conversation server determines multiple UEs for receiving the message according to the user registration information.

It is assumed that the user presets UE1 and UE2 to receive text messages on the CPM conversation server. According to the user registration information, the CPM conversation server determines that the SIP message needs to be sent to UE1 and UE2.

Step 603: The CPM conversation server sends a CCR as an initial charging request to the charging system. The initial charging request carries the UE access information corresponding to media resources.

The UE access information corresponding to media resources is as follows: UE1 and UE2 receive text messages.

Step 604: The charging system performs charging according to the UE access information corresponding to the media resources.

For online charging, the charging system rates the service consumed on this occasion according to the UE access information corresponding to the media resources, and reserves credit for the corresponding user account according to the rating result. For offline charging, the charging system stores the charging information for the service consumed on this occasion.

Step 605: The charging system returns a CCA as an initial charging response to the CPM conversation server.

The charging system returns a CCA as an initial charging response to the CPM conversation server. The CCA carries a charging result. If the charging succeeds, the charging system accepts the service request of the user; and, if the charging fails, the charging system rejects the service request of the user. In this embodiment, it is supposed that the charging succeeds.

Step 606: The CPM conversation server forwards the SIP message to UE1 and UE2.

Step 607: UE1 and UE2 return a 200 OK message to the CPM conversation server.

Step 608: The CPM conversation server sends a CCR as a final charging request to the charging system. The final charging request carries the UE access information corresponding to media resources.

Step 609: The charging system performs charging according to the UE access information corresponding to the media resources.

In this step, the charging system deducts a sum charged for the service consumption.

Step 610: The charging system returns a CCA as a final charging response to the CPM conversation server.

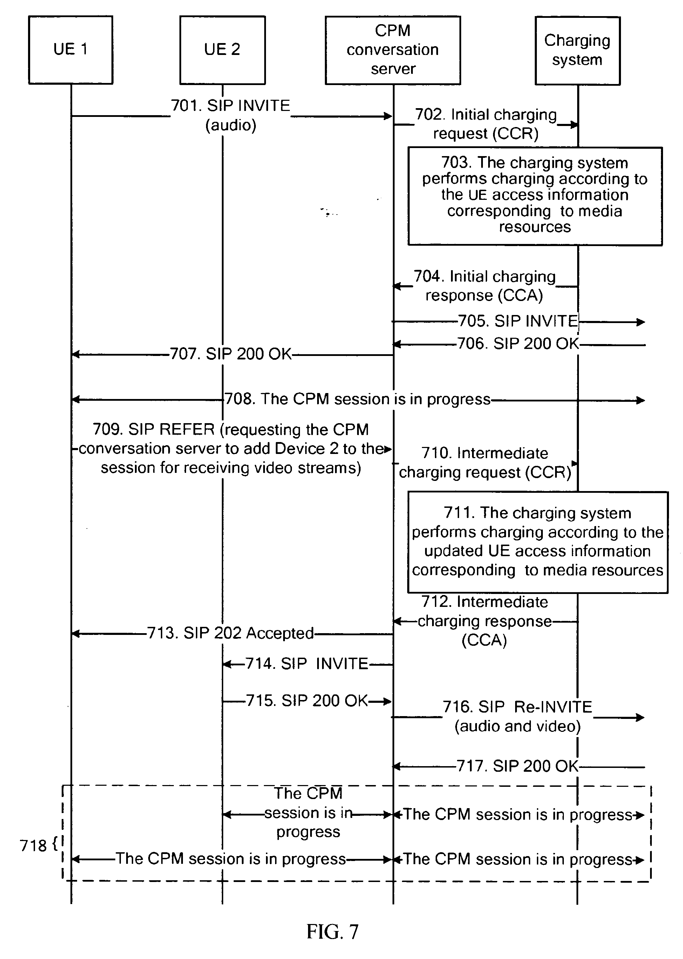

FIG. 7 is a flowchart of a charging method according to the fourth embodiment of the disclosure. In the fourth embodiment, the user uses one UE at the beginning, and adds a new UE to receive media streams during the session. The CPM conversation server sends an intermediate charging request to the charging system according to the old UE access information corresponding to media resources and the new UE access information corresponding to media resources. The charging system performs charging.

Step 701: UE I sends a SIP INVITE message to the CPM conversation server. The SIP INVITE message indicates that the media type supported by UE1 is audio.

The SIP INVITE message carries UE1 information indicating that the media type supported by UE1 is audio. The UE1 information is described through SDP, as detailed in step 403 in the first embodiment.

Step 702: The CPM conversation server sends a CCR as an initial charging request to the charging system. The initial charging request carries the UE access information corresponding to media resources, and the UE access information corresponding to media resources is: UE1 receives audio streams.

Step 703: The charging system performs charging according to the UE access information corresponding to the media resources.

For online charging, the charging system rates the service consumed on this occasion according to the UE access information corresponding to the media resources, and reserves credit for the corresponding user account according to the rating result. For offline charging, the charging system stores the charging information for the service consumed on this occasion.

Step 704: The charging system returns a CCA as an initial charging response to the CPM conversation server.

The charging system returns a CCA as an initial charging response to the CPM conversation server. The CCA carries a charging result. If the charging succeeds, the charging system accepts the service request of the user; and, if the charging fails, the charging system rejects the service request of the user. In this embodiment, it is supposed that the charging succeeds.

Step 705: The CPM conversation server sends the SIP INVITE message. The SIP INVITE message indicates that the media type supported in this session is audio.

Step 706: The CPM conversation server receives a SIP 200 OK response from the opposite party.

Step 707: The CPM conversation server sends the SIP 200 OK response to UE1.

Step 708: The CPM session is ongoing.

Step 709: UE 1 sends a SIP REFER message to the CPM conversation server, requesting the CPM conversation server to add UE2 to the session for receiving video streams in the session.

Step 710: The CPM conversation server sends a CCR as an intermediate charging request to the charging system. The intermediate charging request carries the updated UE access information corresponding to media resources.

The updated UE access information corresponding to media resources is as follows: UN1 receives audio streams, and the new UE2 receives video streams.

It should be noted that: The intermediate charging request may carry the new UE access information corresponding to media resources; that is, the information about the new UE's access to media resources may indicate that the new UE2 receives video streams.

Step 711: The charging system performs charging according to the updated UE access information corresponding to the media resources.

The UE access information corresponding to media resources has changed. Therefore, the charging system performs charging (including rating and credit reservation) according to the updated UE access information corresponding to media resources.

Step 712: The charging system returns a CCA as an intermediate charging response to the CPM conversation server.

Step 713: The CPM conversation server returns a SIP 202 Accepted response to UE1.

Step 714: The CPM conversation server sends a SIP INVITE message to UE2, requesting UE2 to join the session.

Step 715: UE2 returns a SIP 200 OK message to the CPM conversation server.

Step 716: The CPM conversation server sends a SIP Re-INVITE message to the opposite party to update the media resource information. The updated media resource information indicates that UE1 receives audio streams and that UE2 receives video streams.

Step 717: The opposite party returns a SIP 200 OK message to the CPM conversation server.

Step 718: The CPM session is ongoing.

It should be noted that, in the foregoing embodiment, the UE access information corresponding to media resources includes the media type. In practice, the UE access information corresponding to media resources may include one of or any combination of the parameters listed in Table 1, such as the UE access mode (GPRS, xDSL, WIFI, or WiMAX), for example, GPRS for UE1, and WiMAX for UE2, and in this case, the charging method is similar to that in the foregoing embodiment.

Detailed above is a charging method under the disclosure. Accordingly, a network system, a charging system, and an application server are provided in embodiments of the disclosure.

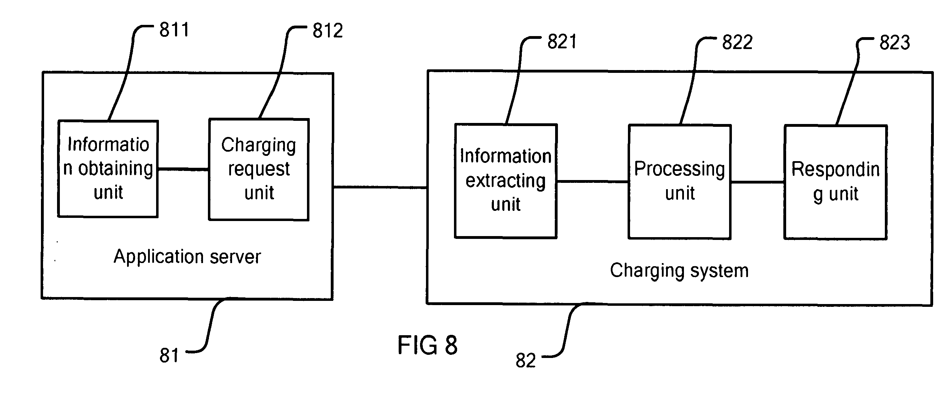

FIG. 8 shows a schematic structure of a network system according to an embodiment of the disclosure.

As shown in FIG. 8, the network system includes: an application server 81, and a charging system 82.

The application server 81 is adapted to send to the charging system 82 a charging request which carries at least two UE's access information corresponding to media resources. The UE access information corresponding to media resources includes one of or any combination of the following parameters, depending on the setting by the operator: (1) URI of the UE, and/or other UE-related information such as device type; (2) UE access mode, for example, GPRS access mode; (3) type of media received by the UE, for example, video format, audio format, or text format; (4) media traffic received by the UE; and (5) type of the message service received by the UE, for example, PoC, or IM.

The charging system 82 is adapted to: perform charging according to the UE access information corresponding to media resources in the charging request sent by the application server 81, and return a charging response to the application server 81 after completion of the charging.

The charging system 82 includes an information extracting unit 821, a processing unit 822, and a responding unit 823.

The information extracting unit 821 is adapted to extract the UE access information corresponding to media resources out of the charging request after receiving the charging request from the application server 81.

The processing unit 822 is adapted to perform charging control according to the UE access information corresponding to media resources, which is extracted by the information extracting unit 821.

The responding unit 823 is adapted to return a charging response to the application server 81 according to the processing result of the processing unit 822.

The application server 81 includes an information obtaining unit 811 and a charging request unit 812.

The information obtaining unit 811 is adapted to: receive a message from each UE or network device, where the message carries UE access information corresponding to media resources; and extract the UE access information corresponding to media resources out of the message, and use the extracted information as reported UE access information corresponding to media resources; or
adapted to: receive a message from each UE or network device, where the message carries UE access information corresponding to media resources;
search the stored user registration information for the preset UE access information corresponding to media resources, and select either the UE access information corresponding to media resources in the received message or the UE access information corresponding to media resources in the user registration information as the reported UE access information corresponding to media resources; or
adapted to: search the stored user registration information for the preset UE access information corresponding to media resources, and use the preset UE access information corresponding to media resources as reported UE access information corresponding to media resources.

The charging request unit 812 is adapted to: generate a charging request according to the UE access information corresponding to media resources which is obtained by the information obtaining unit 811, where the charging request carries the UE access information corresponding to media resources; and send the charging request to the charging system 82.

In the network system, the information obtaining unit 811 of the application server 81 obtains the updated UE access information corresponding to media resources after discovering a change of the UE access information corresponding to media resources; and the charging request unit 812 sends a charging request to the charging system 82, where the charging request carries the updated UE access information corresponding to media resources. The updated UE access information corresponding to media resources may be the changed UE access information corresponding to media resources, or both changed and unchanged UE access information corresponding to media resources. The information obtaining unit 811 of the application server 81 obtains the updated UE access information corresponding to media resources after discovering that a new UE is added to process the media resources; and the charging request unit 812 sends a charging request to the charging system 82, where the charging request carries the updated UE access information corresponding to media resources. The updated UE access information corresponding to media resources may be the new UE access information corresponding to media resources, or both new UE access information corresponding to media resources and old UE access information corresponding to media resources. The charging system 82 performs charging according to the updated UE access information corresponding to media resources in the charging request, and returns a charging response to the application server 81 after completion of the charging.

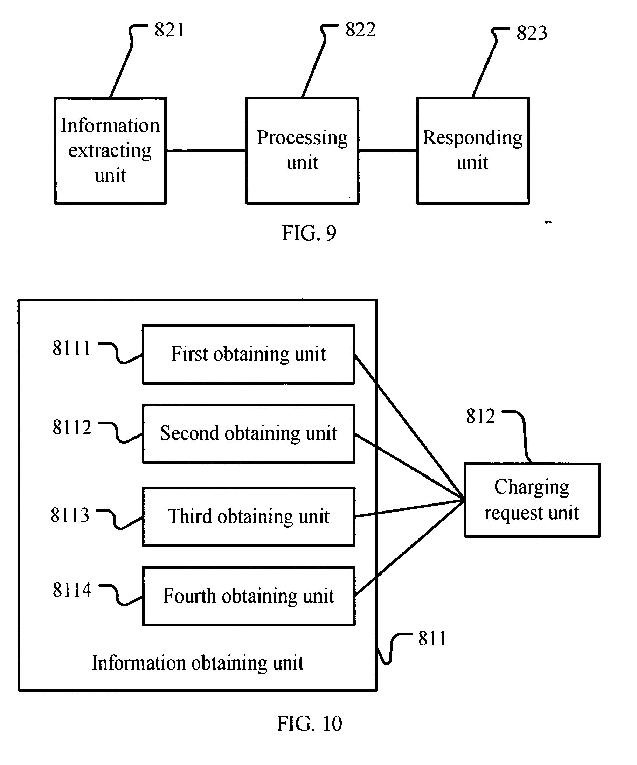

FIG. 9 shows a schematic structure of a charging system according to an embodiment of the disclosure.

As shown in FIG. 9, the charging system includes an information extracting unit 821, a processing unit 822, and a responding unit 823.

The information extracting unit 821 is adapted to: receive a charging request which is sent by an application server 81 and carries at least two UEs' access information about to media resources, and extract the UE access information corresponding to media resources out of the charging request.

The processing unit 822 is adapted to: perform charging according to the UE access information corresponding to media resources, which is extracted by the information extracting unit 821.

The responding unit 823 is adapted to return a charging response to the application server 81 according to the processing result of the processing unit 822.

FIG. 10 shows a schematic structure of an application server according to an embodiment of the disclosure.

As shown in FIG. 10, the application server includes an information obtaining unit 811 and a charging request unit 812.

The information obtaining unit 811 is adapted to obtain UE access information corresponding to media resources.

The charging request unit 812 is adapted to: generate a charging request and send the charging request to the charging system 82, where the charging request carries the at least two UEs' access information corresponding to media resources which is obtained by the information obtaining unit 811.

The information obtaining unit 811 includes a first obtaining module 8111, a second obtaining module 8112, a third obtaining module 8113, and a fourth obtaining module 8114.

The first obtaining module 8111 is adapted to: receive a message from each UE or network device, where the message carries UE access information corresponding to media resources; and extract the UE access information corresponding to media resources out of the message, and use the extracted information as reported UE access information corresponding to media resources.

The second obtaining module 8112 is adapted to: receive a message from each UE or network device, where the message carries UE access information corresponding to media resources; search the stored user registration information for the preset UE access information corresponding to media resources, and select either the UE access information corresponding to media resources in the received message or the UE access information corresponding to media resources in the user registration information as the reported UE access information corresponding to media resources.

The third obtaining module 8113 is adapted to: search the stored user registration information for the preset UE access information corresponding to media resources, and use the preset UE access information corresponding to media resources as reported UE access information corresponding to media resources.

The fourth obtaining module 8114 is adapted to: obtain the updated UE access information corresponding to media resources after discovering a change of the UE access information corresponding to media resources, whereupon the charging request unit 812 sends a charging request carrying the updated UE access information corresponding to media resources to the charging system 82 according to the information obtained by the fourth obtaining module 8114.

The updated UE access information corresponding to media resources may be the changed UE access information corresponding to media resources, or both changed and unchanged UE access information corresponding to media resources.

The fourth obtaining module 8114 is further adapted to: obtain the updated UE access information corresponding to media resources after discovering that a new UE is added to process the media resources, whereupon the charging request unit 812 sends a charging request carrying the updated UE access information corresponding to media resources to the charging system 82 according to the information obtained by the fourth obtaining module 8114. The updated UE access information corresponding to media resources may be new UE's access information corresponding to media resources, or both new UE access information corresponding to media resources and old UE access information corresponding to media resources.

To sum up, the technical solution under the disclosure is as follows: the application server sends to the charging system a charging request which carries at least two UEs' access information corresponding to media resources; the charging system performs charging according to the UE access information corresponding to the media resources in the charging request; and the charging system returns a charging response to the application server after completion of the charging. In the technical solution under the disclosure, the application server may obtain the information about media resources accessed by multiple UEs of one user, and add such information into the charging request sent to the charging system. The charging system extracts such information out of the charging request for charging. In this way, charging is performed for the service processed by multiple UEs of one user in a session.

Further, in the technical solution under the disclosure, the application server obtains the UE access information corresponding to media resources in many modes. For example, the application server determines the reported UE access information corresponding to media resources according to the UE access information corresponding to media resources which is carried in the received message and/or according to the user registration information stored in the application server.

Further, the UE access information corresponding to media resources herein may be: URI of the UE; and/or access mode of the UE; and/or media type received by the UE; and/or media traffic received by the UE; and/or type of the message service received by the UE. Therefore, through precise charging for such information, the operator can implement charging more flexibly; the rating and the charging for the service consumed by the user are more reasonable; and the user experience is improved.

Detailed above are a charging method, a network system, a charging system, and an application server under the disclosure. Although the invention is described through some exemplary embodiments, the invention is not limited to such embodiments.

## Claims

1. A charging method, comprising:
receiving (301), by a charging system, a charging request from an application server,
wherein the charging request carries at least two User Equipments', UEs, access information corresponding to media resources, wherein the application server interacts with at least two UEs of a user to obtain the UE access information corresponding to media resources, and the UE access information corresponding to media resources comprise: an access mode of the UE and a media type received by the UE;
charging (302), by the charging system, according to the UE access information corresponding to media resources in the charging request; and
returning (303), by the charging system, a charging response to the application server after completion of the charging.

2. The charging method of claim 1, wherein, the step of charging according to the UE access information corresponding to media resources in the charging request further comprises:
extracting, by the charging system, the UE access information corresponding to media resources out of the charging request after receiving the charging request; and
performing charging control according to the extracted UE access information corresponding to media resources.

3. The charging method of claim 1 or 2, wherein the UE access information corresponding to media resources in the charging request is obtained by the application server, and the step of obtaining the UE access information corresponding to media resources in the charging request further comprises:
determining (404), by the application server, reported UE access information corresponding to media resources according to the UE access information corresponding to media resources which is carried in a received message and/or according to user registration information stored in the application server.

4. The charging method of claim 3, wherein the step of the determining of the reported UE access information corresponding to media resources according to the UE access information corresponding to media resources which is carried in the received message and/or according to the user registration information stored in the application server further comprises:
by the application server, receiving (403, 503) a message from each UE or network device, wherein the message carries UE access information corresponding to media resources; and extracting the UE access information corresponding to media resources out of the message, and using the extracted UE access information as the reported UE access information corresponding to media resources; or
by the application server, receiving (404, 504) a message from each UE or network device, wherein the message carries the UE access information corresponding to media resources; searching the stored user registration information for preset UE access information corresponding to media resources; and selecting either the UE access information corresponding to media resources in the received message or the UE access information corresponding to media resources in the user registration information as the reported UE access information corresponding to media resources; or
by the application server, searching (602) the stored user registration information for the preset UE access information corresponding to media resources, and using the preset UE access information corresponding to media resources as the reported UE access information corresponding to media resources.

5. The charging method of claim 3, wherein:
the UE access information corresponding to media resources in the charging request further comprises at least one of the following information items:
Uniform Resource Identifier, URI, of a UE; media traffic received by the UE; and type of a message service received by the UE.

6. The charging method of claim 5, wherein the access mode of the UE comprises at least one of the following items:
a General Packet Radio Service, GPRS, access mode, a Digital Subscriber Line, xDSL, access mode, a Wireless Fidelity, WIFI, access mode, or a World Interoperability for Microwave Access, WiMAX, access mode.

7. The charging method of claim 1, wherein:
the charging request is sent (413, 515) by the application server to the charging system after the application server detects a change of the UE access information corresponding to media resources, and the UE access information corresponding to media resources carried in the charging request is the updated UE access information corresponding to media resources.

8. The charging method of claim 1, wherein:
the application server sends (412, 514) the charging request to the charging system again after detecting a change of the UE access information corresponding to media resources, and the charging request carries the changed UE access information corresponding to media resources;
the charging system performs (413, 515) charging according to changed UE access information corresponding to media resources in the charging request; and
the charging system returns (414, 516) a charging response to the application server after completion of the charging.

9. The charging method of claim 7 or 8, wherein the step of detecting, by the application server, a change of the UE access information corresponding to media resources further comprises:
the application server receives (410) a request for changing media resources;
the application server determines (411) a corresponding UE according to preset UE access information corresponding to media resources in stored user registration information, and generates the updated UE access information corresponding to media resources; or
the application server sends (511) the request for changing media resources to each UE, receives (512) a response from each UE, and generates (513) the updated UE access information corresponding to media resources.

10. The charging method of claim 1, wherein:
the charging request is sent (710) by the application server to the charging system after the application server receives (709) a request for adding a new UE to process the media resources, and the charging request carries the updated UE access information corresponding to media resources.

11. The charging method of claim 1, wherein:
the charging request is sent by the application server to the charging system after the application server receives (709) a request for adding a new UE to process the media resources, and the charging request carries new UE access information corresponding to media resources; and the step of charging, by the charging system, according to the UE access information corresponding to media resources in the charging request accordingly comprises:
the charging system performs (711) charging according to the new UE access information corresponding to media resources in the charging request or according to both the new UE access information corresponding to media resources in the charging request and the old UE access information corresponding to media resources.

12. A charging system, comprising:
an information extracting unit (821), adapted to receive a charging request which is sent by an application server and carries at least two User Equipments', UEs', access information corresponding to media resources, and extract the UE access information corresponding to media resources out of the charging request, wherein the application server interacts with at least two UEs of a user to obtain the UE access information corresponding to media resources, and the UE access information corresponding to media resources comprise: an access mode of the UE and a media type received by the UE; and
a processing unit (822), adapted to perform charging according to the UE access information corresponding to media resources, which is extracted by the information extracting unit; and
a responding unit (823), adapted to return a charging response to the application server according to a processing result of the processing unit.

13. An application server, comprising:
an information obtaining unit (811), adapted to obtain User Equipment, UE, access information corresponding to media resources by interacting with at least two UEs of a user, wherein the UE access information corresponding to media resources comprise: an access mode of the UE and a media type received by the UE; and
a charging request unit (812), adapted to generate a charging request and send the charging request to the charging system, wherein the charging request carries at least two UEs access information corresponding to media resources which is obtained by the information obtaining unit.

14. The application server of claim 13, wherein the information obtaining unit comprises at least one of the following modules:
a first obtaining module (8111), adapted to receive a message from each UE or network device, wherein the message carries the UE access information corresponding to media resources; and extract the UE access information corresponding to media resources out of the message, and use the extracted information as reported UE access information corresponding to media resources;
a second obtaining module (8112), adapted to receive a message from each UE or network device, wherein the message carries the UE access information corresponding to media resources; search stored user registration information for preset UE access information corresponding to media resources, and select either the UE access information corresponding to media resources in the received message or the UE access information corresponding to media resources in the user registration information as reported UE access information corresponding to media resources;
a third obtaining module (8113), adapted to search stored user registration information for preset UE access information corresponding to media resources, and use the preset UE access information corresponding to media resources as reported UE access information corresponding to media resources; and
a fourth obtaining module (8114), adapted to obtain updated UE access information corresponding to media resources after detecting a change of the UE access information corresponding to media resources, whereupon the charging request unit sends the charging request carrying the updated UE access information corresponding to media resources to the charging system according to the information obtained by the fourth obtaining module.

15. The application server of claim 14, wherein:
the fourth obtaining module (8114) obtains the updated UE access information corresponding to media resources after discovering that a new UE is added to process the media resources; and
the charging request unit (812) sends the charging request carrying the updated UE access information corresponding to media resources to the charging system according to the information obtained by the fourth obtaining module.

## Patentansprüche

1. Vergebührungsverfahren mit den folgenden Schritten:
ein Vergebührungssystem empfängt (301) eine Vergebührungsanforderung von einem Anwendungsserver, wobei die Vergebührungsanforderung Medienressourcen entsprechende Zugangsinformationen von mindestens zwei Benutzergeräten UE führt, wobei der Anwendungsserver mit mindestens zwei UE eines Benutzers in Interaktion tritt, um die Medienressourcen entsprechenden UE-Zugangsinformationen zu erhalten, und die Medienressourcen entsprechenden UE-Zugangsinformationen einen Zugangsmodus des UE und einen durch das UE empfangenen Medientyp umfassen;
das Vergebührungssystem vergebührt (302) gemäß den Medienressourcen entsprechenden UE-Zugangsinformationen in der Vergebührungsanforderung; und
das Vergebührungssystem gibt nach dem Abschluss der Vergebührung eine Vergebührungsantwort an den Anwendungsserver zurück (303).

2. Vergebührungsverfahren nach Anspruch 1, wobei der Schritt des Vergebührens gemäß den Medienressourcen entsprechenden UE-Zugangsinformationen in der Vergebührungsanforderung ferner Folgendes umfasst:
das Vergebührungssystem extrahiert die Medienressourcen entsprechenden UE-Zugangsinformationen aus der Vergebührungsanforderung nach dem Empfang der Vergebührungsanforderung; und
Vergebührungssteuerung wird gemäß den extrahierten Medienressourcen entsprechenden UE-Zugangsinformationen durchgeführt.

3. Vergebührungsverfahren nach Anspruch 1 oder 2, wobei die Medienressourcen entsprechenden UE-Zugangsinformationen in der Vergebührungsanforderung durch den Anwendungsserver erhalten werden und der Schritt des Erhaltens der Medienressourcen entsprechenden UE-Zugangsinformationen in der Vergebührungsanforderung ferner Folgendes umfasst:
der Anwendungsserver bestimmt (404) gemeldete Medienressourcen entsprechende UE-Zugangsinformationen gemäß den Medienressourcen entsprechenden UE-Zugangsinformationen, die in einer empfangenen Nachricht geführt werden, und/oder gemäß in dem Anwendungsserver gespeicherten Benutzerregistrationsinformationen.

4. Vergebührungsverfahren nach Anspruch 3, wobei der Schritt des Bestimmens der gemeldeten Medienressourcen entsprechenden UE-Zugangsinformationen gemäß den Medienressourcen entsprechenden UE-Zugangsinformationen, die in der empfangenen Nachricht geführt werden, und/oder gemäß den in dem Anwendungsserver gespeicherten Benutzerregistrationsinformationen ferner Folgendes umfasst:
der Anwendungsserver empfängt (403, 503) eine Nachricht von jedem UE oder jeder Netzwerkeinrichtung, wobei die Nachricht die Medienressourcen entsprechenden UE-Zugangsinformationen führt; und extrahiert die Medienressourcen entsprechenden UE-Zugangsinformationen aus der Nachricht und verwendet die extrahierten UE-Zugangsinformationen als die gemeldeten Medienressourcen entsprechenden UE-Zugangsinformationen; oder
der Anwendungsserver empfängt (404, 504) eine Nachricht von jedem UE oder jeder Netzwerkeinrichtung, wobei die Nachricht die Medienressourcen entsprechenden UE-Zugangsinformationen führt; durchsucht die gespeicherten Benutzerregistrationsinformationen nach voreingestellten Medienressourcen entsprechenden UE-Zugangsinformationen; und wählt entweder die Medienressourcen entsprechenden UE-Zugangsinformationen in der empfangenen Nachricht oder die Medienressourcen entsprechenden UE-Zugangsinformationen in den Benutzerregistrationsinformationen als die gemeldeten Medienressourcen entsprechenden UE-Zugangsinformationen; oder
der Anwendungsserver durchsucht (602) die gespeicherten Benutzerregistrationsinformationen nach den voreingestellten Medienressourcen entsprechenden UE-Zugangsinformationen und verwendet die voreingestellten Medienressourcen entsprechenden UE-Zugangsinformationen als die gemeldeten Medienressourcen entsprechenden UE-Zugangsinformationen.

5. Vergebührungsverfahren nach Anspruch 3, wobei
die Medienressourcen entsprechenden UE-Zugangsinformationen in der Vergebührungsanforderung ferner mindestens einen der folgenden Informationsposten umfassen:
den Uniform Resource Identifier URI eines UE; durch das UE empfangenen Medienverkehr; und die Art eines durch das UE empfangenen Nachrichtendienstes.

6. Vergebührungsverfahren nach Anspruch 5, wobei der Zugangsmodus des UE mindestens einen der folgenden Posten umfasst:
einen Zugangsmodus des General Packet Radio Service GPRS, einen Zugangsmodus der Digital Subscriber Line xDSL, einen Zugangsmodus der Wireless Fidelity, WIFI oder einen Zugangsmodus der World Interoperability for Microwave Access WiMAX.

7. Vergebührungsverfahren nach Anspruch 1, wobei
die Vergebührungsanforderung durch den Anwendungsserver zu dem Vergebührungssystem gesendet wird (413, 515), nachdem der Anwendungsserver eine Änderung der Medienressourcen entsprechenden UE-Zugangsinformationen detektiert, und die Medienressourcen entsprechenden UE-Zugangsinformationen, die in der Vergebührungsanforderung geführt werden, die aktualisierten Medienressourcen entsprechenden UE-Zugangsinformationen sind.

8. Vergebührungsverfahren nach Anspruch 1, wobei
der Anwendungsserver die Vergebührungsanforderung nochmals zu dem Vergebührungssystem sendet (412, 514), nachdem eine Änderung der Medienressourcen entsprechenden UE-Zugangsinformationen detektiert wird, und die Vergebührungsanforderung die geänderten Medienressourcen entsprechenden UE-Zugangsinformationen führt;
das Vergebührungssystem Vergebührung gemäß geänderten Medienressourcen entsprechenden UE-Zugangsinformationen in der Vergebührungsanforderung durchführt (413, 515); und
das Vergebührungssystem nach dem Abschluss der Vergebührung eine Vergebührungsantwort an den Anwendungsserver zurückgibt (414, 516).

9. Vergebührungsverfahren nach Anspruch 7 oder 8, wobei der Schritt des Detektierens einer Änderung der Medienressourcen entsprechenden UE-Zugangsinformationen durch den Anwendungsserver ferner Folgendes umfasst:
der Anwendungsserver empfängt (410) eine Anforderung zum Ändern von Medienressourcen;
der Anwendungsserver bestimmt (411) ein entsprechendes UE gemäß voreingestellten Medienressourcen entsprechenden UE-Zugangsinformationen in gespeicherten Benutzerregistrationsinformationen und erzeugt die aktualisierten Medienressourcen entsprechenden UE-Zugangsinformationen; oder
der Anwendungsserver sendet (511) die Anforderung zum Ändern von Medienressourcen zu jedem UE, empfängt (512) eine Antwort von jedem UE und erzeugt (513) die aktualisierten Medienressourcen entsprechenden UE-Zugangsinformationen.

10. Vergebührungsverfahren nach Anspruch 1, wobei
die Vergebührungsanforderung durch den Anwendungsserver zu dem Vergebührungssystem gesendet wird (710), nachdem der Anwendungsserver eine Anforderung zum Hinzufügen eines neuen UE zum Verarbeiten der Medienressourcen empfängt (709) und die Vergebührungsanforderung die aktualisierten Medienressourcen entsprechenden UE-Zugangsinformationen führt.

11. Vergebührungsverfahren nach Anspruch 1, wobei
die Vergebührungsanforderung durch den Anwendungsserver zu dem Vergebührungssystem gesendet wird, nachdem der Anwendungsserver eine Anforderung zum Hinzufügen eines neuen UE zum Verarbeiten der Medienressourcen empfängt (709) und die Vergebührungsanforderung neue Medienressourcen entsprechende UE-Zugangsinformationen führt; und der Schritt des Vergebührens durch das Vergebührungssystem gemäß den Medienressourcen entsprechenden UE-Zugangsinformationen in der Vergebührungsanforderung entsprechend Folgendes umfasst:
das Vergebührungssystem führt Vergebührung gemäß den neuen Medienressourcen entsprechenden UE-Zugangsinformationen in der Vergebührungsanforderung oder gemäß sowohl den neuen Medienressourcen entsprechenden UE-Zugangsinformationen in der Vergebührungsanforderung als auch den alten Medienressourcen entsprechenden UE-Zugangsinformationen durch (711).

12. Vergebührungssystem, umfassend:
eine Informationsextraktionseinheit (821), die dafür ausgelegt ist, eine Vergebührungsanforderung zu empfangen, die durch einen Anwendungsserver gesendet wird und Medienressourcen entsprechende Zugangsinformationen von mindestens zwei Benutzergeräten UE führt, und die Medienressourcen entsprechenden UE-Zugangsinformationen aus der Vergebührungsanforderung zu extrahieren, wobei der Anwendungsserver mit mindestens zwei UE eines Benutzers in Interaktion tritt, um die Medienressourcen entsprechenden UE-Zugangsinformationen zu erhalten, und die Medienressourcen entsprechenden UE-Zugangsinformationen Folgendes umfassen: einen Zugangsmodus des UE und einen durch das UE empfangenen Medientyp; und
eine Verarbeitungseinheit (822), die dafür ausgelegt ist, Vergebührung gemäß den Medienressourcen entsprechenden UE-Zugangsinformationen, die durch die Informationsextraktionseinheit extrahiert werden, durchzuführen; und
eine Antworteinheit (823), die dafür ausgelegt ist, gemäß einem Verarbeitungsergebnis der Verarbeitungseinheit eine Vergebührungsantwort an den Anwendungsserver zurückzugeben.

13. Anwendungsserver, umfassend:
eine Informationserhalteeinheit (811), die dafür ausgelegt ist, durch Interaktion mit mindestens 2 UE eines Benutzers Medienressourcen entsprechende UE-Zugangsinformationen von Benutzergeräten UE zu erhalten, wobei die Medienressourcen entsprechenden UE-Zugangsinformationen Folgendes umfassen: einen Zugangsmodus des UE und einen durch das UE empfangenen Medientyp; und
eine Vergebührungsanforderungseinheit (812), die dafür ausgelegt ist, eine Vergebührungsanforderung zu erzeugen und die Vergebührungsanforderung zu dem Vergebührungssystem zu senden, wobei die Vergebührungsanforderung Medienressourcen entsprechende Zugangsinformationen mindestens zweier UE führt, die durch die Informationserhalteeinheit erhalten werden.

14. Anwendungsserver nach Anspruch 13, wobei die Informationserhalteeinheit mindestens eines der folgenden Module umfasst:
ein erstes Erhaltemodul (8111), das dafür ausgelegt ist, von jedem UE oder jeder Netzwerkeinrichtung eine Nachricht zu empfangen, wobei die Nachricht die Medienressourcen entsprechenden UE-Zugangsinformationen führt; und die Medienressourcen entsprechenden UE-Zugangsinformationen aus der Nachricht zu extrahieren und die extrahierten Informationen als gemeldete Medienressourcen entsprechende UE-Zugangsinformationen zu verwenden;
ein zweites Erhaltemodul (8112), das dafür ausgelegt ist, von jedem UE oder jeder Netzwerkeinrichtung eine Nachricht zu empfangen, wobei die Nachricht die Medienressourcen entsprechenden UE-Zugangsinformationen führt; gespeicherte Benutzerregistrationsinformationen nach voreingestellten Medienressourcen entsprechenden UE-Zugangsinformationen zu durchsuchen und entweder die Medienressourcen entsprechenden UE-Zugangsinformationen in der empfangenen Nachricht oder die Medienressourcen entsprechenden UE-Zugangsinformationen in den Benutzerregistrationsinformationen als gemeldete Medienressourcen entsprechende UE-Zugangsinformationen auszuwählen;
ein drittes Erhaltemodul (8113), das dafür ausgelegt ist, gespeicherte Benutzerregistrationsinformationen nach voreingestellten Medienressourcen entsprechenden UE-Zugangsinformationen zu durchsuchen und die voreingestellten Medienressourcen entsprechenden UE-Zugangsinformationen als gemeldete Medienressourcen entsprechende UE-Zugangsinformationen zu verwenden; und
ein viertes Erhaltemodul (8114), das dafür ausgelegt ist, nach dem Detektieren einer Änderung der Medienressourcen entsprechenden UE-Zugangsinformationen aktualisierte Medienressourcen entsprechende UE-Zugangsinformationen zu erhalten, woraufhin die Vergebührungsanforderungseinheit die Vergebührungsanforderung, die die aktualisierten Medienressourcen entsprechenden UE-Zugangsinformationen führt, gemäß den durch das vierte Erhaltemodul erhaltenen Informationen zu dem Vergebührungssystem sendet.

15. Anwendungsserver nach Anspruch 14, wobei
das vierte Erhaltemodul (8114) die aktualisierten Medienressourcen entsprechenden UE-Zugangsinformationen nach dem Entdecken erhält, dass ein neues UE zum Verarbeiten der Medienressourcen hinzugefügt wird; und
die Vergebührungsanforderungseinheit (812) die Vergebührungsanforderung, die die aktualisierten Medienressourcen entsprechenden UE-Zugangsinformationen führt, gemäß den durch das vierte Erhaltemodul erhaltenen Informationen zu dem Vergebührungssystem sendet.

## Revendications

1. Procédé de facturation, comprenant :
la réception (301), grâce à un système de facturation, d'une demande de facturation provenant d'un serveur d'application, dans lequel la demande de facturation transporte au moins des informations d'accès à deux équipements utilisateur, UE,
correspondant à des ressources multimédias, dans lequel le serveur d'application interagit avec au moins deux équipements UE d'un utilisateur afin de récupérer les informations d'accès aux équipements UE correspondant à des ressources multimédias, et les informations d'accès aux équipements UE correspondant aux ressources multimédias comprennent un mode d'accès de l'équipement UE et un type de média reçu par l'équipement UE,
la facturation (302), grâce au système de facturation, en fonction des informations d'accès aux équipements UE correspondant aux ressources multimédias dans la demande de facturation, et
le renvoi (303), par le système de facturation, d'une réponse de facturation vers le serveur d'application après l'achèvement de la facturation.

2. Procédé de facturation selon la revendication 1, dans lequel l'étape de facturation en fonction des informations d'accès aux équipements UE correspondant aux ressources multimédias dans la demande de facturation comprend en outre :
l'extraction depuis la demande de facturation, grâce au système de facturation, des informations d'accès aux équipements UE correspondant aux ressources multimédias après avoir reçu la demande de facturation, ainsi que l'exécution d'une commande de facturation en fonction des informations d'accès aux équipements UE extraites correspondant aux ressources multimédias.

3. Procédé de facturation selon la revendication 1 ou 2, dans lequel les informations d'accès aux équipements UE correspondant aux ressources multimédias dans la demande de facturation sont obtenues par le serveur d'application, et l'étape de récupération des informations d'accès aux équipements UE correspondant aux ressources multimédias dans la demande de facturation comprend en outre :
la détermination (404), grâce au serveur d'application, d'informations d'accès aux équipements UE rapportées correspondant aux ressources multimédias en fonction des informations d'accès aux équipements UE correspondant aux ressources multimédias qui sont transportées dans un message reçu et/ou en fonction d'informations d'enregistrement utilisateur mémorisées dans le serveur d'application..

4. Procédé de facturation selon la revendication 3, dans lequel l'étape de détermination des informations d'accès aux équipements UE rapportées correspondant aux ressources multimédias en fonction des informations d'accès aux équipements UE correspondant aux ressources multimédias qui sont transportées dans le message reçu et/ou en fonction des informations d'enregistrement utilisateur mémorisées dans le serveur d'application comprend en outre :
la réception (403, 503), par le serveur d'application, d'un message provenant de chaque équipement UE ou dispositif réseau, dans lequel le message transporte des informations d'accès aux équipements UE correspondant à des ressources multimédias et l'extraction depuis le message des informations d'accès aux équipements UE correspondant aux ressources multimédias, ainsi que l'utilisation des informations d'accès aux équipements UE extraites comme étant les informations d'accès aux équipements UE rapportées correspondant aux ressources multimédias, ou
la réception (404, 504), par le serveur d'application, d'un message provenant de chaque équipement UE ou dispositif réseau, dans lequel le message transporte les informations d'accès aux équipements UE correspondant aux ressources multimédias, la recherche des informations d'enregistrement utilisateur mémorisées pour prédéfinir des informations d'accès aux équipements UE correspondant aux ressources multimédias, et la sélection soit des informations d'accès aux équipements UE correspondant aux ressources multimédias dans le message reçu, soit des informations d'accès aux équipements UE correspondant aux ressources multimédias dans les informations d'enregistrement utilisateur comme étant les informations d'accès aux équipements UE rapportées correspondant aux ressources multimédias, ou
la recherche (602), par le serveur d'application, des informations d'enregistrement utilisateur mémorisées pour les informations prédéfinies d'accès aux équipements UE correspondant aux ressources multimédias, et l'utilisation des informations prédéfinies d'accès aux équipements UE correspondant aux ressources multimédias comme étant les informations d'accès aux équipements UE rapportées correspondant aux ressources multimédias.

5. Procédé de facturation selon la revendication 3, dans lequel:
les informations d'accès aux équipements UE correspondant aux ressources multimédias dans la demande de facturation comprennent en outre au moins l'un des éléments d'information suivants :
l'identificateur uniforme de ressources, URI, d'un équipement UE, le trafic multimédia reçu par l'équipement UE et le type de service de message reçu par l'équipement UE.

6. Procédé de facturation selon la revendication 5, dans lequel le mode d'accès de l'équipement UE comprend au moins l'un des éléments suivants :
un mode d'accès par service général de radiocommunications par paquets, GPRS, un mode d'accès par ligne numérique d'abonné, xDSL, un mode d'accès de fidélité sans fil, WIFI ou un mode d'accès par interopérabilité mondiale pour accès par hyperfréquences, WiMAX.

7. Procédé de facturation selon la revendication 1, dans lequel :
la demande de facturation est envoyée (413, 515) par le serveur d'application au système de facturation après que le serveur d'application a détecté une modification des informations d'accès aux équipements UE correspondant aux ressources multimédias, et les informations d'accès aux équipements UE correspondant aux ressources multimédias, transportées dans la demande de facturation, représentent les informations d'accès aux équipements UE mises à jour correspondant aux ressources multimédias.

8. Procédé de facturation selon la revendication 1, dans lequel :
le serveur d'application envoie de nouveau (412, 514) la demande de facturation au système de facturation après avoir détecté une modification des informations d'accès aux équipements UE correspondant aux ressources multimédias, et la demande de facturation transporte les informations d'accès aux équipements UE modifiées correspondant aux ressources multimédias,
le système de facturation effectue (413, 515) une facturation en fonction des informations d'accès aux équipements UE modifiées correspondant aux ressources multimédias dans la demande de facturation, et
le système de facturation renvoie (414, 516) une réponse de facturation au serveur d'application après achèvement de la facturation.

9. Procédé de facturation selon la revendication 7 ou 8, dans lequel l'étape de détection par le serveur d'application d'une modification des informations d'accès aux équipements UE correspondant aux ressources multimédias comprend en outre :
la réception (410), par le serveur d'application, d'une demande destinée à modifier les ressources multimédias,
la détermination (411), par le serveur d'application, d'un équipement UE correspondant en fonction des informations prédéfinies d'accès aux équipements UE correspondant aux ressources multimédias dans les informations d'enregistrement utilisateur mémorisées et la génération des informations d'accès aux équipements UE mises à jour correspondant aux ressources multimédias, ou
l'envoi (511), par le serveur d'application, de la demande destinée à modifier les ressources multimédias sur chaque équipement UE, la réception (512) d'une réponse provenant de chaque équipement UE et la génération (513) des informations d'accès aux équipements UE mises à jour correspondant aux ressources multimédias.

10. Procédé de facturation selon la revendication 1, dans lequel :
la demande de facturation est envoyée (710) par le serveur d'application au système de facturation après que le serveur d'application a reçu (709) une demande pour ajouter un nouvel équipement UE pour traiter les ressources multimédias, et la demande de facturation transporte les informations d'accès aux équipements UE mises à jour correspondant aux ressources multimédias.

11. Procédé de facturation selon la revendication 1, dans lequel :
la demande de facturation est envoyée par le serveur d'application au système de facturation après que le serveur d'application a reçu (709) une demande pour ajouter un nouvel équipement UE pour traiter les ressources multimédias, et la demande de facturation transporte de nouvelles informations d'accès aux équipements UE correspondant aux ressources multimédias, et l'étape de facturation, par le système de facturation, en fonction des informations d'accès aux équipements UE correspondant aux ressources multimédias dans la demande de facturation comprend en conséquence:
l'exécution (711), par le système de facturation, de la facturation en fonction des nouvelles informations d'accès aux équipements UE correspondant aux ressources multimédias dans la demande de facturation ou en fonction à la fois des nouvelles informations d'accès aux équipements UE correspondant aux ressources multimédias dans la demande de facturation et des anciennes informations d'accès aux équipements UE correspondant aux ressources multimédias.

12. Système de facturation, comprenant :
une unité d'extraction d'informations (821) conçue pour recevoir une demande de facturation qui est envoyée par un serveur d'application et qui transporte au moins des informations d'accès à deux équipements utilisateur, UE, correspondant à des ressources multimédias, et pour extraire de la demande de facturation les informations d'accès aux équipements UE correspondant aux ressources multimédias,
dans lequel le serveur d'application interagit avec au moins deux équipements UE appartenant à un utilisateur afin de récupérer des informations d'accès aux équipements UE correspondant aux ressources multimédias, et les informations d'accès aux: équipements UE correspondant aux ressources multimédias comprennent : un mode d'accès de l'équipement UE et un type de média reçu par l'équipement UE, et
une unité de traitement (822), conçue pour effectuer une facturation en fonction des informations d'accès aux équipements UE correspondant aux ressources multimédias, lesquelles sont extraites par l'unité d'extraction d'informations, et
une unité de réponse (823), conçue pour renvoyer une réponse de facturation au serveur d'application en fonction du résultat de traitement de l'unité de traitement.

13. Serveur d'application, comprenant :
une unité de récupération d'informations (811), conçue pour récupérer des informations d'accès aux équipements utilisateur, UE, correspondant à des ressources multimédias en interagissant avec au moins deux équipements UE appartenant à un utilisateur, dans lequel les informations d'accès aux équipements UE correspondant aux ressources multimédias comprennent : un mode d'accès de l'équipement UE et un type de média reçu par l'équipement UE, et
une unité de demande de facturation (812), conçue pour générer une demande de facturation et pour envoyer la demande de facturation au système de facturation, dans lequel la demande de facturation transporte au moins des informations d'accès à deux équipements UE correspondant à des ressources multimédias qui sont récupérées grâce à l'unité de récupération d'informations.

14. Serveur d'application selon la revendication 13, dans lequel l'unité de récupération d'informations comprend au moins l'un des modules suivants :
un premier module de récupération (8111), conçu pour recevoir un message provenant de chaque équipement UE ou dispositif réseau, dans lequel le message transporte les informations d'accès aux équipements UE correspondant aux ressources multimédias, et pour extraire du message les informations d'accès aux équipements UE correspondant aux ressources multimédias, ainsi que pour utiliser les informations extraites comme étant des informations d'accès aux équipements UE rapportées correspondant aux ressources multimédias,
un deuxième module de récupération (8112), conçu pour recevoir un message provenant de chaque équipement UE ou dispositif réseau, dans lequel le message transporte les informations d'accès aux équipements UE correspondant aux ressources multimédias, pour rechercher des informations d'enregistrement utilisateur mémorisées afin de prédéfinir des informations d'accès aux équipements UE correspondant aux ressources multimédias, et pour sélectionner soit les informations d'accès aux équipements UE correspondant aux ressources multimédias dans le message reçu, soit les informations d'accès aux équipements UE correspondant aux ressources multimédias dans les informations d'enregistrement utilisateur comme étant des informations d'accès aux équipements UE rapportées correspondant aux ressources multimédias,
un troisième module de récupération (8113) conçu pour rechercher des informations d'enregistrement utilisateur mémorisées pour prédéfinir des informations d'accès aux équipements UE correspondant aux ressources multimédias et pour utiliser les informations prédéfinies d'accès aux équipements UE correspondant aux ressources multimédias comme étant des informations d'accès aux équipements UE rapportées correspondant aux ressources multimédias, et
un quatrième module de récupération (8114), conçu pour récupérer des informations d'accès aux équipements UE mises à jour correspondant aux ressources multimédias après avoir détecté une modification des informations d'accès aux équipements UE correspondant aux ressources multimédias, grâce à quoi l'unité de demande de facturation envoie la demande de facturation transportant les informations d'accès aux équipements UE mises à jour correspondant aux ressources multimédias vers le système de facturation en fonction des informations récupérées par le quatrième module de récupération.

15. Serveur d'application selon la revendication 14, dans lequel :
le quatrième module de récupération (8114) récupère les informations d'accès aux équipements UE mises à jour correspondant aux ressources multimédias après avoir découvert qu'un nouvel équipement UE est ajouté au traitement des ressources multimédias, et
l'unité de demande de facturation (812) envoie la demande de facturation transportant les informations d'accès aux équipements UE mises à jour correspondant aux ressources multimédias vers le système de facturation en fonction des informations récupérées par le quatrième module de récupération.
